# EUROPÄISCHE PATENTSCHRIFT

(11) **EP 1 947 723 B1**
(45) Veröffentlichungstag und Bekanntmachung des Hinweises auf die Patenterteilung: **01.09.2010**
(21) Anmeldenummer: 07124114.5
(22) Anmeldetag: 28.12.2007
(51) Int. Cl.: H01M 8/02, H01M 8/06, F01N 3/08, B01D 53/92

(54) **Energiebereitstellungssystem**
System for providing energy
Système d'approvisionnement d'énergie

(30) Priorität: 16.01.2007 DE 102007003114
(43) Veröffentlichungstag der Anmeldung: 23.07.2008
(73) Patentinhaber: J. Eberspächer GmbH & Co. KG, 73730 Esslingen (DE)
(72) Erfinder: Kaupert, Andreas, 73730, Esslingen (DE)
(74) Vertreter: BRP Renaud & Partner

(56) Entgegenhaltungen:
- DE-A1- 10 232 671
- DE-A1-102005 016 915
- DE-A1-102005 040 052
- US-A- 4 382 189

## Beschreibung

Die vorliegende Erfindung betrifft ein System zur Bereitstellung von Energie, insbesondere in einem Kraftfahrzeug.

Ein System gemäß dem Oberbegriff des Anspruchs 1 ist bekannt aus der DE 10 2005 016 915 A.

Ein derartiges Energiebereitstellungssystem kann z.B. eine Brennkraftmaschine, in der Regel ein Kolbenmotor oder auch ein Wankelmotor, die mit einem Kraftstoff, wie z.B. Diesel, Benzin, Erdgas oder ein beliebiger anderer Kohlenwasserstoff, betreibbar ist und die zum Bereitstellen von Antriebsenergie dient, sowie ein Brennstoffzellensystem umfassen, das durch die Umsetzung eines Wasserstoffgas enthaltenden Anodengases und eines Sauerstoffgas enthaltenden Kathodengases elektrische Energie bereitstellt. Üblicherweise kann ein derartiges Brennstoffzellensystem hierzu einen Reformer zum Generieren von Wasserstoffgas enthaltendem Reformatgas aus einem Wasserstoff enthaltenden Brennstoff und einem Sauerstoff enthaltenden Oxidator aufweisen sowie eine Brennstoffzelle zum Generieren von elektrischem Strom aus dem durch das Reformatgas gebildeten Anodengas und einem Kathodengas.

Es besteht das Bedürfnis, die Werte für Schadstoffemissionen und Kraftstoffverbrauch auch bei einem derartigen Energiebereitstellungssystem zu verbessern.

Aus der DE 10 2004 028 651 A1 ist es grundsätzlich bekannt, bei einer Brennkraftmaschine zur Verbesserung der Schadstoffemissionen einen Reformer vorzusehen, mit dem ein Wasserstoffgas enthaltendes Reformatgas erzeugt werden kann, das in einem nachfolgenden Ammoniakerzeuger zur Herstellung von Ammoniak verwendet werden kann. Das Ammoniak kann dann in einem nachfolgenden SCR-Katalysator zur Reduktion von Stickoxiden verwendet werden. Bei der bekannten Brennkraftmaschine besitzt der Reformer nur eine einzige, an die maximal anfallenden Abgasmenge der Brennkraftmaschine angepasste Betriebsstufe. Desweiteren ist eine Verteilereinrichtung vorgesehen, die eine bedarfsgerechte Aufteilung des Reformatgases zwischen dem Ammoniakerzeuger und einer Frischgasanlage der Brennkraftmaschine in Abhängigkeit des Betriebszustands der Brennkraftmaschine ermöglicht. Hierdurch kann Reformatgas, das in der Abgasanlage nicht zur Herstellung von Ammoniak zur Reduktion von Stickoxiden benötigt wird, über die Frischgasanlage der Brennkraftmaschine zugeführt werden. Hierdurch kann der Kraftstoffverbrauch der Brennkraftmaschine reduziert werden.

Die vorliegende Erfindung beschäftigt sich mit dem Problem, für ein Energiebereitstellungssystem der eingangs genannten Art eine verbesserte Ausführungsform anzugeben, die sich insbesondere durch verbesserte Werte für Schadstoffemissionen und Kraftstoffverbrauch auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, das Energiebereitstellungssystem mit einer Reformatzuführeinrichtung auszustatten, die so ausgestaltet ist, dass mit ihr Reformatgas zur Brennkraftmaschine zuführbar ist, um dieses dort in Antriebsenergie umzusetzen. Mit Hilfe einer derartigen Reformatzuführeinrichtung wird eine Kopplung der Teilsysteme des Energiebereitstellungssystems geschaffen, indem Reformatgas des Brennstoffzellensystems dem Brennkraftmaschinensystem zur Verbrennung in der Brennkraftmaschine zugeführt wird. Hierdurch lässt sich ein nicht unerheblicher Synergieeffekt erzielen, da Reformatgas im Brennstoffzellensystem ohnehin zur Verfügung steht und somit mit vergleichsweise wenig Aufwand über die Reformatzuführeinrichtung auch dem Brennkraftmaschinensystem zur Verfügung gestellt wird.

Weiter ist ein Reformatspeicher mit Ventileinrichtung vorgesehen, der an die Reformatleitung angeschlossen ist.

Bei vorteilhaften Ausführungsformen der vorliegenden Erfindung kann vorgesehen sein, dass Reformatgas bedarfsabhängig an einer geeigneten Stelle in eine Abgas von der Brennkraftmaschine abführende Abgasanlage einzuleiten, um so die Regeneration eines NOX-Speichers und/oder eines Partikelfilters und/oder die Aufheizung eines Oxidationskatalysators zu erzielen.

Die Regeneration des NOX-Speichers kann mit Hilfe von Reformatgas realisiert werden, das für den Regenerationsbetrieb stromauf des NOX-Speichers in die Abgasanlage eingeleitet wird. Der Wasserstoff dieses Reformatgases besitzt eine deutlich höhere Reaktivität als Kohlenwasserstoffe, wodurch die Regeneration des NOX-Speichers bereits bei relativ niedrigen Temperaturen gestartet werden kann. Außerdem kann das Reformatgas in Abhängigkeit seiner Herstellung bereits eine relativ hohe Temperatur aufweisen, was die Erwärmung des NOX-Speichers beschleunigt. Der Wasserstoff setzt das gespeicherte NOX in Wasser und Stickstoff um, ohne dass dabei Kohlendioxid entsteht. Insoweit wird durch die Erfindung eine Verbesserung der Emissionswerte erreicht. Da außerdem für die Regeneration des NOX-Speichers keine Kohlenwasserstoffe mehr benötigt werden, kann die Brennkraftmaschine stöchiometrisch betrieben werden, ebenso ist ein leicht unterstöchiometrischer Betrieb möglich. Ein überstöchiometrischer Betrieb, also ein Betrieb mit Luftüberschuss, ist während der Regeneration zu vermeiden, da sonst der eingeleitete Wasserstoff nicht mit dem NOX, sondern mit dem Sauerstoff der Luft reagiert.

Die Regeneration des Partikelfilters kann mit Hilfe von Reformatgas realisiert werden, das für den Regenerationsbetrieb stromauf des Partikelfilters in die Abgasleitung eingeleitet wird. Je nach Temperatur kann das Reformatgas bei überstöchiometrischem Motorbetrieb verbrennen und dadurch die zum Starten der Partikelfilterregeneration erforderliche Wärme erzeugen. Außerdem kann das Reformatgas in Abhängigkeit seiner Herstellung bereits eine relativ hohe Temperatur aufweisen, was die Aufheizung des Partikelfilters beschleunigt.

Die Aufheizung des Oxidationskatalysators kann mit Hilfe von Reformatgas realisiert werden, das für den Aufheizbetrieb stromauf des Oxidationskatalysators in die Abgasleitung eingeleitet wird. Die gegenüber Kohlenwasserstoffen deutlich erhöhte Reaktivität des Wasserstoffs ermöglicht eine exotherme Verbrennungsreaktion im Oxidationskatalysator bereits bei stark reduzierten Temperaturen. Gleichzeitig wird dadurch der Oxidationskatalysator rasch erwärmt. Außerdem kann das Reformatgas in Abhängigkeit seiner Herstellung bereits eine relativ hohe Temperatur aufweisen, was die Erwärmung des Reformatgases beschleunigt. Die Zuführung des Wasserstoffgases stromauf des Oxidationskatalysators kann auch zum Einleiten der Partikelfilterregeneration, also zum Aufheizen des Partikelfilters genutzt werden.

Bei diesen Ausführungsformen kann somit durch die Kopplung der beiden Teilsysteme, nämlich des Brennstoffzellensystems und des Brennkraftmaschinensystems, ein zusätzlicher Synergieeffekt erzielt werden, um die genannten Komponenten der Abgasanlage bei der Reduktion der Schadstoffe im Abgas zu unterstützen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche, ähnliche oder funktional gleiche Komponenten beziehen. Es zeigen, jeweils schematisch,

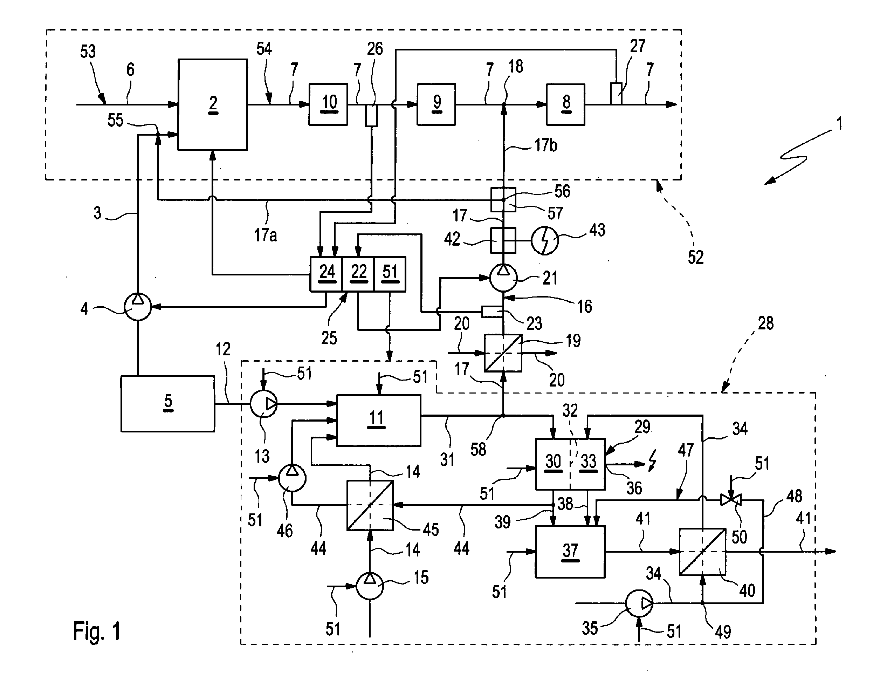

- Fig. 1 bis 3: jeweils eine stark vereinfachte, schaltplanartige Prinzipdarstellung eines Energiebereitstellungssystems bei unterschiedlichen Ausführungsformen.

Entsprechend den Fig. 1 bis 3 umfasst ein Energiebereitstellungssystem 1, das vorzugsweise in einem Kraftfahrzeug angeordnet ist, ein durch einen mit unterbrochener Linie dargestellten Rahmen symbolisiertes Brennkraftmaschinensystem 52 mit einer Brennkraftmaschine 2, z.B. ein Kolbenmotor, die in üblicher Weise mit einem Kraftstoff betrieben wird und die zum Generieren mechanischer Antriebsenergie dient. Verwendet wird dabei als Kraftstoff ein Kohlenwasserstoff, wie z.B.

Benzin, Diesel oder Erdgas. Den Kraftstoff erhält die Brennkraftmaschine 2 über eine Kraftstoffleitung 3, in der eine Kraftstofffördereinrichtung 4, z.B. eine Pumpe, angeordnet ist. Die Kraftstoffleitung 3 ist an einen Kraftstofftank 5 angeschlossen, in dem der Kraftstoff bevorratet ist. Das Brennkraftmaschinesystem 52 umfasst außerdem eine an die Brennkraftmaschine 2 angeschlossene Frischgasanlage 53 mit einer Frischgasleitung 6, über die die Brennkraftmaschine 2 mit einem Sauerstoff enthaltendem Frischgas, vorzugsweise Luft, versorgt wird.

Ferner umfasst das Brennkraftmaschinensystem 52 eine Abgasanlage 54 mit einer Abgasleitung 7, die an die Brennkraftmaschine 2 angeschlossen ist und die Motorabgas von der Brennkraftmaschine 2 abführt, das im Betrieb der Brennkraftmaschine 2 bei der Verbrennung des Kraftstoffs entsteht. Die Abgasanlage 54 kann gemäß den gezeigten Beispielen in der Abgasleitung 7 einen NOX-Speicher 8 enthalten, der vorzugsweise durch einen NOX-Speicherkatalysator gebildet ist. Der NOX-Speicher 8 ist so ausgestaltet, dass er bei seiner Durchströmung mit Motorabgas darin enthaltenes NOX einlagert bzw. speichert. Zusätzlich oder alternativ kann die Abgasanlage 54 in der Abgasleitung 7, vorzugsweise stromauf des NOX-Speichers 8, ein Partikelfilter 9 aufweisen, das vorzugsweise bei einer als Dieselmotor ausgebildeten Brennkraftmaschine 2 zur Anwendung kommt und das zum Abreinigen von Partikeln, vorzugsweise Rußpartikel, dient, die das Motorabgas mitführt. Zusätzlich oder alternativ kann die Abgasanlage 54 in der Abgasleitung 7, zweckmäßig stromauf des NOX-Speichers 8 bzw. stromauf des Partikelfilters 9, einen Oxidationskatalysator 10 aufweisen, der insbesondere dazu dient, beim überstöchiometrischen Betrieb der Brennkraftmaschine 2, also bei einem Betrieb mit Luft- bzw. Sauerstoff-überschuss, durch unvollständige Verbrennungsvorgänge in der Brennkraftmaschine 2 nicht oder nicht vollständig umgesetzte Kohlenwasserstoffe und Kohlenmonoxid umzusetzen.

Das Energiebereitstellungssystem 1 umfasst außerdem ein Brennstoffzellensystem 28, das hier ebenfalls durch einen mit unterbrochener Linie angedeuteten Rahmen symbolisiert ist. Dieses Brennstoffzellensystem 28 umfasst zumindest einen Reformer 11 sowie wenigstens eine Brennstoffzelle 29 und dient zur Bereitstellung elektrischer Energie. Hierzu ist die jeweilige Brennstoffzelle 29, in der Regel durch einen Stapel einzelner Brennstoffzellenelemente gebildet ist, dazu ausgestaltet, in bekannter Weise elektrischen Strom aus einem Wasserstoffgas enthaltenden Anodengas und einem Sauerstoffgas enthaltenden Kathodengas zu generieren. Der jeweilige Reformer 11 ist so ausgestaltet, dass er aus einem Wasserstoff enthaltenden Brennstoff und einem Sauerstoff enthaltenden Oxidator ein Wasserstoffgas enthaltendes Reformatgas generieren kann.

Der Reformer 11 arbeitet beispielsweise mit partieller Oxidation eines Kohlenwasserstoffs, die z.B. bei einem stark unterstöchiometrischen Betrieb mit Hilfe eines entsprechenden Katalysators realisierbar ist. Als Brennstoff eignen sich für den Reformer 11 daher Kohlenwasserstoffe, wie z.B.

Benzin, Diesel, Biodiesel und Erdgas, die Wasserstoff molekular bzw. atomar, also chemisch gebunden, enthalten. Zweckmäßig ist dabei eine Ausführungsform, bei welcher der Reformer 11 als Brennstoff den Kraftstoff verwendet, mit dem auch die Brennkraftmaschine 2 betrieben wird. Dementsprechend ist hier eine Brennstoffleitung 12 vorgesehen, die ebenfalls an den Kraftstofftank 5 angeschlossen ist. Die Brennstoffleitung 12 versorgt den Reformer 11 mit dem als Brennstoff dienenden Kraftstoff und enthält hierzu vorzugsweise eine Brennstofffördereinrichtung 13, z.B. eine Pumpe. Zur Versorgung des Reformers 11 mit einem geeigneten Oxidator ist eine Oxidatorleitung 14 vorgesehen, in der eine entsprechende Oxidatorfördereinrichtung 15, z.B. ein Gebläse, angeordnet sein kann. Diese Oxidatorfördereinrichtung 15 realisiert aus kostengründen ein kleineres Druckniveau als die Brennkraftmaschine 2. Als Oxidator dient vorzugsweise Luft.

Das Energiebereitstellungssystem 1 weist außerdem eine Reformatzuführeinrichtung 16 auf, mit deren Hilfe zumindest ein Teil des vom Reformer 11 erzeugten Reformatgases der Brennkraftmaschine 2 zuführbar ist. Hierzu ist die Reformatzuführeinrichtung 16 auf geeignete Weise mit dem Brennkraftmaschinensystem 52 gekoppelt.

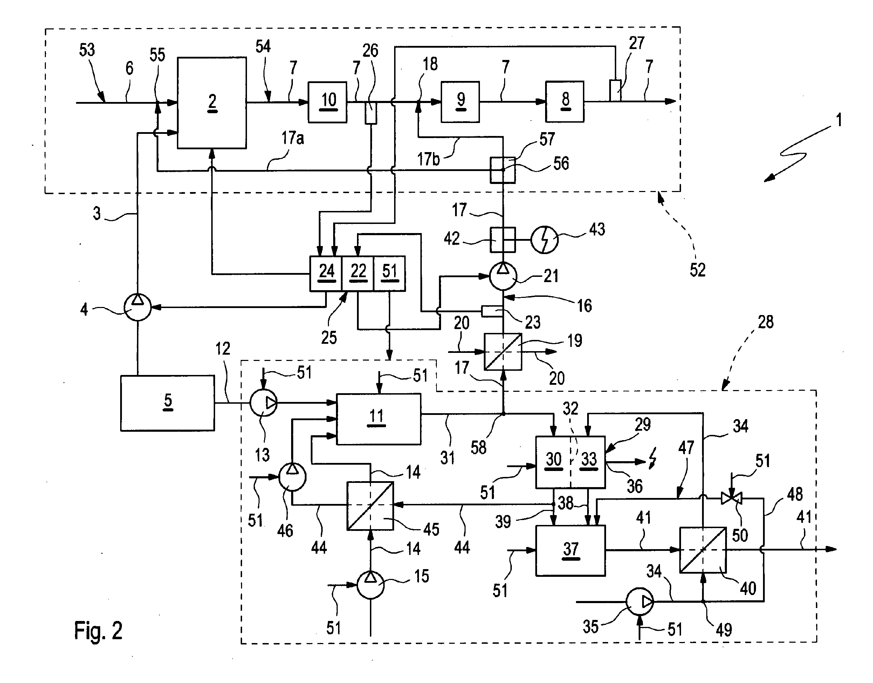

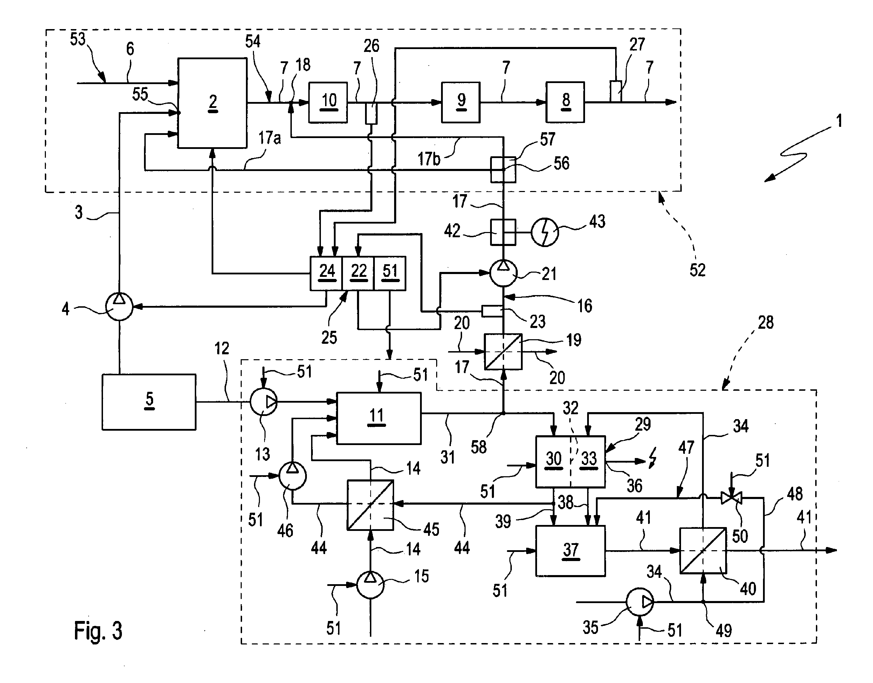

Die Reformatzuführeinrichtung 16 umfasst hierzu eine Reformatleitung 17, die eingangsseitig mit dem Reformer 11 kommuniziert und die ausgangsseitig über einen Hauptzweig 17a mit einer Zuführstelle 55 verbunden ist. Bei der in Fig. 1 gezeigten Ausführungsform ist diese Zuführstelle 55 an der Kraftstoffleitung 3 ausgebildet, das bedeutet, dass die Reformatzuführeinrichtung 16 das Reformatgas einem Kraftstoffpfad zuführt, über den die Brennkraftmaschine 2 mit dem vorzugsweise gasförmigen Kraftstoff versorgt wird. Bei der in Fig. 2 gezeigten Ausführungsform ist die Zuführstelle 55 an der Frischgasleitung 6 angeordnet. Dementsprechend kann die Reformatzuführeinrichtung 16 das Reformatgas einem Frischgaspfad zuführen, über den die Brennkraftmaschine 2 mit Frischgas versorgt wird. Gemäß Fig. 3 kann die Zuführstelle 55 bei einer weiteren Ausführungsform auch unmittelbar an der Brennkraftmaschine 2 angeordnet sein, so dass die Zumischung des Reformatgases zum Frischgas oder zum Kraftstoff oder zum Kraftstoff-Frischgas-Gemisch erst innerhalb der Brennkraftmaschine 2 erfolgt. In diesem Fall kann die Reformatzuführeinrichtung 16 das Reformatgas der Brennkraftmaschine 2 direkt zuführen.

Bei den hier gezeigten Ausführungsformen ist die Reformatzuführeinrichtung 16 optional außerdem so ausgestaltet, dass sie bei Bedarf Reformatgas auch der Abgasanlage 54 zuführen kann. Hierzu weist die Reformatzuführeinrichtung 16 zumindest einen Nebenzweig 17b auf, der von der Reformatleitung 17 an einer Abzweigstelle 56 vom Hauptzweig 17a abzweigt. Zweckmäßig weist die Reformatzuführeinrichtung 16 im Bereich der Abzweigstelle 56 ein Steuerventil 57 auf, das so ausgestaltet ist, dass damit die der Brennkraftmaschine 2 und die der Abgasanlage 54 zugeführten Mengen an Reformatgas einstellbar sind.

Die Reformatleitung 17 ist mit ihrem Nebenzweig 17b über eine Einleitstelle 18 an die Abgasanlage 54 bzw. an die Abgasleitung 7 angeschlossen. Die Einleitstelle 18 ist bei der in Fig. 1 gezeigten Ausführungsform stromauf des NOX-Speichers 8 und stromab des Partikelfilters 9 angeordnet. Bei der in Fig. 2 gezeigten Ausführungsform ist die Einleitstelle 18 stromauf des Partikelfilters 9 und stromab des Oxidationskatalysators 10 angeordnet. Bei der in Fig. 3 gezeigten Ausführungsform ist die Einleitstelle 18 stromauf des Oxidationskatalysators 10 angeordnet. Weitere Ausführungsformen können sich durch Kombinationen der gezeigten Beispiele ergeben. Denkbar ist z.B. eine Ausführungsform, bei der die Reformatzuführeinrichtung 16 so ausgestaltet ist, dass sie bedarfsabhängig Reformatgas stromauf des NOX-Speichers 8 und/oder stromauf des Partikelfilters 9 und/oder stromauf des Oxidationskatalysators 10 in die Abgasleitung 7 einleiten kann. Hierzu ist die Reformatleitung 17 über entsprechende Nebenzweige 17b zumindest an zwei der drei gezeigten Einleitstellen 18 an die Abgasleitung 7 angeschlossen. Die gezielte Einbringung des Reformatgases an den verschiedenen Einleitstellen kann z.B. mit Hilfe einer entsprechenden Ventileinrichtung realisiert werden.

In der Reformatleitung 17 kann optional ein Reformatwärmeübertrager 19 angeordnet sein. Dieser ist zweckmäßig stromauf der Abzweigstelle 56 bzw. stromauf des Steuerventils 57 angeordnet. Auf diese Weise kann mit Hilfe eines entsprechenden Kühlmediums dem Reformatgas Wärme entzogen werden, bevor es der Brennkraftmaschine 2 und/oder der Abgasanlage 54 zugeführt wird. Bei einer bevorzugten Ausführungsform kann der Reformatwärmeübertrager 19 in einen Kühlkreis 20 der Brennkraftmaschine 2 eingebunden sein, so dass er die Reformatleitung 17 mit dem Kühlkreis 20 wärmeübertragend koppelt. Dementsprechend kann die dem Reformatgas entzogene Wärme über einen ohnehin vorhandenen Kühlkreis abgeführt werden. Gleichzeitig kann ein gegebenenfalls vorhandener Wärmebedarf der Brennkraftmaschine 2 hierdurch zumindest teilweise gedeckt werden. Der Reformatwärmeübertrager 19 ist vorzugsweise so ausgelegt, dass das darin gekühlte Reformatgas jedenfalls nicht unter die Taupunkttemperatur bzw. Kondensationstemperatur abgekühlt wird, um eine Kondensation von im Reformatgas enthaltenen Wasserdampf und Restkohlenwasserstoffen zu vermeiden.

Die Reformatzuführeinrichtung 16 kann ferner eine Reformatfördereinrichtung 21 aufweisen, z.B. ein Gebläse, eine Pumpe oder einen Kompressor, die in der Reformatleitung 17, und zwar vorzugsweise stromab des Reformatwärmeübertragers 19 angeordnet ist. Auch die Reformatfördereinrichtung 21 ist vorzugsweise stromauf der Abzweigstelle und/oder stromauf des Steuerventils 57 angeordnet. Durch die Anordnung der Reformatfördereinrichtung 21 und/oder des Steuerventils 57 stromab des Reformatwärmeübertragers 19 kann die jeweilige Komponente 21 bzw. 57 vergleichsweise preiswert realisiert werden, da sie nur eine reduzierte Temperaturbeständigkeit aufweisen muss. Sofern die Oxidatorfördereinrichtung 15 stärker ausgelegt wird und ein hinreichendes Druckniveau realisieren kann, ist es grundsätzlich möglich, auf die Reformatfördereinrichtung 21 und/oder auf den Reformatwärmeübertrager 19 zu verzichten.

Die Reformatzuführeinrichtung 16 kann außerdem mit einer Ventileinrichtung 42 ausgestattet sein, die vorzugsweise stromab der Reformatfördereinrichtung 21 in der Reformatleitung 17 angeordnet ist. Die Ventileinrichtung 42 dient dazu, eine unerwünschte Rückströmung von Motorabgas, von Frischgas und von Kraftstoff durch die Reformatleitung 17 zum Reformer 11 zu verhindern und kann hierzu z.B. als Rückschlagsperrventil ausgestaltet sein. Optional kann des Weiteren ein Reformatspeicher 43 vorhanden sein, der vorzugsweise stromab der Reformatfördereinrichtung 21 und insbesondere stromauf der Abzweigstelle 56 bzw. des Steuerventils 57 an die Reformatleitung 17 angeschlossen ist oder direkt in die Reformatleitung 17 eingesetzt oder eingebunden ist. Im gezeigten Beispiel erfolgt die Kopplung zwischen dem Reformatspeicher 43 und der Reformatleitung 17 über die Ventileinrichtung 42, die dann zur Realisierung entsprechender Schaltzustände zum Aufladen des Reformatspeichers 43 mit Reformatgas aus dem Reformer 11 und zum Entladen des Reformatspeichers 43 durch Einleiten des Reformatgases in die Abgasleitung 7 ausgestaltet ist. Hierdurch ist es beispielsweise möglich, das Reformatgas unter einem vorbestimmten Druck im Reformatspeicher 43 zu speichern und bei Bedarf und einer Luftzahl kleiner 1 impuls- oder schlagartig der Brennkraftmaschine 2 und/oder der Abgasanlage 54 zu zuführen.

Zweckmäßig ist das Energiebereitstellungssystem 1 mit einer Steuerung 22 ausgestattet, mit deren Hilfe die Reformatzuführeinrichtung 16 betätigbar ist. Hierzu ist die Steuerung 22 zweckmäßig mit der Reformatfördereinrichtung 21 gekoppelt. Ferner kann die Steuerung 22 mit einem Temperatursensor 23 gekoppelt sein, der in oder an der Reformatleitung 17 stromab des Reformatwärmeübertragers 19 angeordnet ist und die Reformatgastemperatur ermittelt. Ebenso können weitere Temperatursensoren vorgesehen sein. Zusätzlich oder alternativ kann die Steuerung 22 auch mit wenigstens einem Drucksensor zusammenwirken, beispielsweise um mittels einer Differenzdruckmessung den aktuellen Beladungszustand des Partikelfilters 9 zu ermitteln. Des weiteren kann die Steuerung 22 mit dem Steuerventil 57 gekoppelt sein. Die Steuerung 22 ist außerdem mit der Brennkraftmaschine 2 bzw. mit einer mit der Brennkraftmaschine 2 gekoppelten Motorsteuerung 24 gekoppelt. Vorzugsweise sind die Steuerung 22 und die Motorsteuerung 24 in einem gemeinsamen Steuergerät 25 angeordnet. Die Motorsteuerung 24 betätigt beispielsweise die Kraftstofffördereinrichtung 4, die zweckmäßig durch eine Einspritzeinrichtung gebildet ist. Ferner ist die Motorsteuerung 24 z.B. mit einer Lambda-Sonde 26 gekoppelt, welche die Luftzahl im Motorabgas bestimmt. Die Anordnung der Lambda-Sonde 26 an oder in der Abgasleitung 7 zwischen dem Oxidationskatalysator 10 und dem Partikelfilter 9 ist hier rein exemplarisch; insbesondere kann die Lambda-Sonde 26 auch zwischen NOX-Speicher 8 und Partikelfilter 9 oder stromab des NOX-Speichers 8 oder stromauf des Oxidationskatalysators 10 an oder in der Abgasleitung 7 angeordnet sein. Optional kann die Motorsteuerung 24 noch mit einer NOX-Sonde 27 gekoppelt sein, die stromab des NOX-Speichers 8 an oder in der Abgasleitung 7 angeordnet ist und mit der NOX im Motorabgas detektierbar ist. Beispielsweise kann mit Hilfe einer derartigen NOX-Sonde 27 der Beladungszustand des NOX-Speichers 8 ermittelt werden. Sobald die NOX-Sonde 27 NOX im Motorabgas feststellt, ist eine Regeneration des NOX-Speichers 8 erforderlich.

Die Brennstoffzelle 29 verwendet als Anodengas das vom Reformer 11 generierte Reformatgas, das hierzu einer Anodenseite 30 der Brennstoffzelle 29 über eine eingangsseitig mit dem Reformer 11 kommunizierende Anodengasleitung 31 zugeführt wird. Bei einer Abzweigstelle 58 erfolgt die Kopplung zwischen der Reformatzuführeinrichtung 16 und dem Brennstoffzellensystem 28. Bei der Abzweigstelle 58 zweigt die Reformatleitung 17 von der mit dem Reformer 11 verbundenen Anodengasleitung 31 ab. Alternativ zweigt bei der Abzweigung 58 die Anodengasleitung 31 von der mit dem Reformer 11 verbundenen Reformatleitung 17 ab.

In der Brennstoffzelle 29 ist die Anodenseite 30 durch ein Elektrolyt 32, das insbesondere eine Membran ist, von einer Kathodenseite 33 getrennt. Der Kathodenseite 33 wird das Kathodengas über eine Kathodengasleitung 34 zugeführt, in der eine Kathodengasfördereinrichtung 35, z.B. ein Gebläse, angeordnet sein kann. Als Kathodengas wird vorzugsweise Luft verwendet.

Die Brennstoffzelle 29 weist zumindest einen elektrischen Anschluss 36 auf, an dem im Betrieb der Brennstoffzelle 29 elektrischer Strom abgreifbar ist. Die Brennstoffzelle 29 kann als Hochtemperatur-Brennstoffzelle, insbesondere als Festkörper-Brennstoffzelle, sog. SOFC-Brennstoffzelle ausgestaltet sein. Ebenso ist es möglich, die Brennstoffzelle 29 als Niedertemperatur-Brennstoffzelle auszugestalten, insbesondere als PEM-Brennstoffzelle, die mit einer Protonen-Transport-Membran bzw. mit einer Polymer-Elektrolyt-Membran arbeitet. Sofern es sich um eine PEM-Brennstoffzelle handelt, ist der Reformer 11 zweckmäßig mit einer CO-Gasreinigungseinrichtung ausgestattet, um den Kohlenmonoxidgehalt im Refomatgas zu reduzieren.

Vorzugsweise kann das Brennstoffzellensystem 28 mit einem Restgasbrenner 37 ausgestattet sein, in dem eine Verbrennung von Wasserstoffgas enthaltendem Anodenabgas mit Sauerstoffgas enthaltendem Kathodenabgas stattfindet. Vorzugsweise kann der Restgasbrenner 37 in die Brennstoffzelle 29 ausgangsseitig integriert sein, so dass die Brennstoffzelle 29 und der Restgasbrenner 37 eine bauliche Einheit bilden. Im gezeigten Beispiel wird dem Restgasbrenner 37 das Kathodenabgas über eine Kathodenabgasleitung 38 zugeführt, während er das Anodenabgas über eine Anodenabgasleitung 39 erhält.

Das Brennstoffzellensystem 28 ist vorzugsweise mit wenigstens einem Wärmeübertrager 40 ausgestattet, der einerseits in eine Brennerabgasleitung 41 und andererseits z.B. in die Kathodengasleitung 34 eingebunden ist. Der Wärmeübertrager 40 dient zur wärmeübertragenden Kopplung des vom Restgasbrenner 37 erzeugten Brennerabgases z.B. mit dem der Brennstoffzelle 29 zuzuführenden Kathodengas. Ebenso kann der Wärmeübertrager 40 dazu genutzt werden, grundsätzlich beliebige Edukte für den Reformer 11 und/oder für die Brennstoffzelle 29 vorzuwärmen. Beispielsweise lässt sich mit dem Wärmeübertrager 40 Wasser verdampfen, das dem Reformer 11 zur Reformatbildung zuführbar ist. Bei einer bevorzugten Ausführungsform kann der Wärmeübertrager 40 in den Restgasbrenner 37 ausgangsseitig baulich integriert sein. Der Restgasbrenner 37 bildet dann zusammen mit dem Wärmeübertrager 40 eine bauliche Einheit.

Das Brennstoffzellensystem 28 kann außerdem mit einer Rezirkulationsleitung 44 ausgestattet sein, die einerseits an die Anodenabgasleitung 39 und andererseits an die Eingangsseite des Reformers 11 angeschlossen ist. Über die Rezirkulationsleitung 44 kann Wasserstoff enthaltendes Anodenabgas dem Reformerprozess zugeführt werden, was diesen verbessert. In der Rezirkulationsleitung 44 kann vorzugsweise ein Rezirkulationswärmeübertrager 45 angeordnet sein, der außerdem z.B. in der Oxidatorleitung 14 angeordnet ist. Dieser Rezirkulationswärmeübertrager 45 bewirkt im Betrieb einerseits eine Erwärmung des Oxidators, was den Reformerprozess verbessert, und andererseits eine Kühlung des rezirkulierten Anodenabgases, was es ermöglicht, stromab des Rezirkulationswärmeübertragers 45 eine vergleichsweise preiswerte Rezirkulationsfördereinrichtung 46, z.B. eine Pumpe, einen Kompressor oder ein Gebläse, in der Rezirkulationsleitung 45 zum Antreiben des Anodenabgases anzuordnen.

Insbesondere für einen Startvorgang des Brennstoffzellensystems 28 kann außerdem der Restgasbrenner 37 mit einer Kühlgasversorgung 47 ausgestattet sein, die z.B. über eine Kühlgasleitung 48 dem Restgasbrenner 37, bevorzugt kathodenseitig, ein geeignetes Kühlgas, vorzugsweise Luft, zuführt. Beispielsweise zweigt die Kühlgasleitung 48 bei 49 stromauf des Wärmeübertragers 40 von der Kathodengasleitung 34 ab. Zum Regulieren der Kühlgasmenge kann ein entsprechendes Stellglied 50 vorgesehen sein.

Ferner ist auch das Brennstoffzellensystem 28 zweckmäßig mit einer Steuerung 51 ausgestattet. Diese Brennstoffzellensystemsteuerung 51 kommuniziert auf geeignete Weise mit der Steuerung 22 und/oder mit der Motorsteuerung 24 und kann - wie hier - im Steuergerät 25 angeordnet sein. Die Brennstoffzellensystemsteuerung 51 dient zur Betätigung des Brennstoffzellensystems 28 bzw. der einzelnen Komponenten des Brennstoffzellensystems 28. Beispielsweise ist hierzu die Brennstoffzellensystemsteuerung 51 mit den Fördereinrichtungen 13, 15, 35, 46, mit dem Stellglied 50, mit dem Reformer 11, mit der Brennstoffzelle 29 und mit dem Restgasbrenner 37 verbunden.

Das erfindungsgemäße Energiebereitstellungssystem 1 arbeitet wie folgt:

Bei einem Kaltstart der Brennkraftmaschine 2 ist die Brennkraftmaschine 2 vergleichsweise kalt und besitzt insbesondere Umgebungstemperatur. Um möglichst günstige Werte für Schadstoffemissionen und Kraftstoffverbrauch zu erzielen, muss die Brennkraftmaschine 2 eine gewissen Betriebstemperatur aufweisen. Je schneller sie diese Betriebstemperatur erreicht, desto günstiger sind die erzielbaren Werte für Schadstoffemissionen und Kraftstoffverbrauch. Bis zum Erreichen der gewünschten Betriebstemperatur befindet sich die Brennkraftmaschine 2 in einem Warmlaufbetrieb bzw. in einer Warmlaufphase.

Während dieser Warmlaufphase kann die Steuerung 22 die Reformatzuführeinrichtung 16 so ansteuern, dass diese Reformat der Brennkraftmaschine 2 zuführt. Dies ist grundsätzlich möglich, da das Brennstoffzellensystem 28 unabhängig vom Brennkraftmaschinensystem 52 betrieben werden kann, beispielsweise um in einem damit ausgestatteten Fahrzeug eine motorunabhängige Stromversorgung unterschiedlicher elektrischer Verbraucher zu realisieren. Der Wasserstoff des Reformatgases erhöht in den Brennräumen der Brennkraftmaschine 2 die Reaktivität des darin eingebrachten Gemischs aus Reformatgas und Frischgas bzw. aus Reformatgas, Frischgas und Kraftstoff, sofern zusätzlich auch Kraftstoff zugeführt wird. Hierdurch kann der Verbrennungsprozess stabilisiert werden. Gleichzeitig wird die Wärmeabgabe innerhalb des Verbrennungsprozesses erhöht, was zu einer schnelleren Aufheizung der Brennkraftmaschine 2 führt. Neben der Nutzung der im Reformatgas chemischen gebundenen Wärme kann über den Reformatwärmeübertrager 19 auch die darin thermisch enthaltene Wärme zum Aufheizen der Brennkraftmaschine 2 genutzt werden, sofern es sich bei dem mit dem Reformatwärmeübertrager 19 gekoppelten Kühlkreis 20 um den Kühlkreis der Brennkraftmaschine 2 handelt.

Durch die Zuführung von Reformatgas zur Brennkraftmaschine 2 kann mit Hilfe der Reformatzuführeinrichtung 16 die Warmlaufphase der Brennkraftmaschine 2 zeitlich verkürzt werden, was insgesamt zu einer Verbesserung der Werte für Schadstoffemissionen und Kraftstoffverbrauch führt. Sobald die Brennkraftmaschine 2 ihre gewünschte Betriebstemperatur aufweist, kann die Steuerung 22 die Reformatzuführeinrichtung 16 so ansteuern, dass diese die Zuführung von Reformatgas zur Brennkraftmaschine 2 einstellt.

Im normalen Betrieb der Brennkraftmaschine 2 wird diese stöchiometrisch oder überstöchiometrisch, also mit Luftüberschuss betrieben. In diesem Normalbetrieb erzeugt die Brennkraftmaschine 2 Motorabgas, das NOX enthält. Das NOX wird im NOX-Speicher 8 eingelagert. Weiter fallen im Betrieb der Brennkraftmaschine 2 Partikel an, die das Partikelfilter 9 dem Motorabgas entzieht und einlagert. Sobald der NOX-Speicher 8 einen vorbestimmten Sättigungsgrad erreicht, ist eine Regeneration des NOX-Speichers 8 erforderlich. Dementsprechend ist eine Regeneration des Partikelfilters 9 erforderlich, sobald das Partikelfilter 9 einen vorbestimmten Beladungsgrad erreicht. Alternativ kann die Regeneration des NOX-Speichers 8 bzw. des Partikelfilters 9 in Abhängigkeit vorbestimmter Betriebszeitdauern der Brennkraftmaschine 2 durchgeführt werden.

Für die Regeneration des NOX-Speichers 8 wird die Brennkraftmaschine 2 stöchiometrisch oder leicht unterstöchiometrisch, jedenfalls nicht überstöchiometrisch betrieben. Bei einem stöchiometrischen Betrieb ist die Luftzahl gleich 1. Bei einem unterstöchiometrischen Betrieb wird die Luftzahl auf einen Wert kleiner als 1,0 eingestellt. Der stöchiometrische oder leicht unterstöchiometrische Betrieb der Brennkraftmaschine 2 wird über die Steuerung 22 bzw. über die Motorsteuerung 24 eingestellt.

Während dieses Regenerationsbetriebs der Brennkraftmaschine 2 steuert die Steuerung 22 die Reformatzuführeinrichtung 16 zum Einleiten von Reformatgas in die Abgasleitung 7 stromauf des NOX-Speichers 8 bzw. zwischen dem Partikelfilter 9 und dem NOX-Speicher 8 an. Hierzu betätigt die Steuerung 22 beispielsweise die Reformatfördereinrichtung 21 auf geeignete Weise. Das während des Betriebs des Reformers 11 bzw. während des Betriebs des Brennstoffzellensystems 28 generierte Reformatgas wird somit zumindest teilweise über die Reformatleitung 17 in die Abgasleitung 7 eingespeist, vermischt sich dort mit dem Motorabgas und führt im NOX-Speicher 8 zur gewünschten Regenerationsreaktion. Sobald die Regeneration des NOX-Speichers 8 beendet ist, z.B. nach einer vorbestimmten Zeitdauer, deaktiviert die Steuerung 22 die Reformatfördereinrichtung 21. Außerdem wird die Brennkraftmaschine 22 wieder in ihren Normalbetriebszustand zurückversetzt.

Für die Regeneration des Partikelfilters 9 betätigt die Steuerung 22 die Reformatzuführeinrichtung 16 zum Einleiten von Reformatgas stromauf des Partikelfilters 9. Das Reformatgas kann bereits die erwünschte Aufheizung des Partikelfilters 9 auf die Aktivierungs- bzw. Light-Off-Temperatur der Regenerationsreaktion bewirken. Demnach kann es ausreichend sein, das Reformatgas stromab des Oxidationskatalysators 10 in die Abgasleitung 7 einzuleiten. Ebenso kann das Reformatgas stromauf des Oxidationskatalysators 10 in die Abgasleitung 7 eingeleitet werden, um so durch die Umsetzung des Wasserstoffs mit Luft-Sauerstoff im Oxidationskatalysator 10 Wärme zu erzeugen, die über die Abgasströmung in das Partikelfilter 9 gelangt und dieses aufheizt.

Eine Einleitung von Reformatgas in die Abgasleitung 7 außerhalb des jeweiligen Regenerationsbetriebs ist während des Betriebs des Brennstoffzellensystems 28 bzw. des Reformers 11 nicht zu erwarten, da die Reformatleitung 17 durch den Reformatwärmeübertrager 19 und durch die Reformatfördereinrichtung 21 einen vergleichsweise hohen Durchströmungswiderstand aufweist. Grundsätzlich kann jedoch aus Sicherheitsgründen ein entsprechendes Sperrventil, z.B. die Ventileinrichtung 42, in der Reformatleitung 17 angeordnet sein.

Kumulativ oder alternativ kann vorgesehen sein, beim Starten der Brennkraftmaschine 2 auch bei einer Luftzahl größer als 1 die Reformatzuführeinrichtung 16 zum Einleiten von Reformatgas in die Abgasleitung 7 anzusteuern. Durch Einleiten des Reformatgases stromauf des NOX-Speichers 8 bzw. stromauf des Oxidationskatalysators 10 ist es möglich, den NOX-Speicher 8 und/oder den Oxidationskatalysator 10 rascher auf die jeweilige Betriebstemperatur zu bringen, die der NOX-Speicher 8 benötigt, um die gewünschte Speicherfunktion für NOX zu entfalten, und die der Oxidationskatalysator 10 benötigt, um die gewünschte Oxidation von Restkohlenwasserstoffen und Kohlenmonoxid durchzuführen.

Vorteilhaft ist bei den unterschiedlichen Betriebszuständen, wenn die einzelnen Steuerungen 22, 24 und 51 insoweit miteinander kommunizieren, dass ein Parallelbetrieb des Brennstoffzellensystems 28 zur Stromerzeugung mit dem Bedarf an Reformatgas zum Starten bzw. Warmlaufen der Brennkraftmaschine 2 bzw. zum Regenerieren des NOX-Speichers 8 bzw. des Partikelfilters 9 abgestimmt werden kann.

## Patentansprüche

1. System zum Bereitstellen von Energie, insbesondere in einem Kraftfahrzeug,
- mit einer mit einem Kraftstoff betreibbaren Brennkraftmaschine (2) zum Bereitstellen von Antriebsenergie,
- mit einem Brennstoffzellensystem (28) zum Bereitstellen von elektrischer Energie,
- wobei das Brennstoffzellensystem (28) einen Reformer (11) zum Generieren von Wasserstoffgas enthaltendem Reformatgas aus einem Wasserstoff enthaltenden Brennstoff und einem Sauerstoff enthaltenden Oxidator aufweist,
- wobei das Brennstoffzellensystem (28) eine Brennstoffzelle (29) zum Generieren von elektrischem Strom aus einem durch das Reformatgas gebildeten Anodengas und einem Sauerstoffgas enthaltenden Kathodengas aufweist,
- wobei für die Umsetzung von Reformatgas in Antriebsenergie eine Reformatzuführeinrichtung (16) zum Zuführen von Reformatgas zur Brennkraftmaschine (2) vorgesehen ist, **dadurch gekennzeichnet,**
- **dass** die Reformatzuführeinrichtung (16) eine Reformatfördereinrichtung (21) aufweist, die in eine Reformatleitung (17) eingebunden ist,
- **dass** die Reformatzuführeinrichtung (16) einen Reformatspeicher (43) mit Ventileinrichtung (42) aufweist, der an die Reformatleitung (17) angeschlossen ist.

2. Energiebereitstellungssystem nach Anspruch 1,
**dadurch gekennzeichnet,**
- **dass** ein Kraftstofftank (5) zur Bevorratung des Kraftstoffs vorgesehen ist,
- **dass** eine Kraftstoffleitung (3) zur Versorgung der Brennkraftmaschine (2) mit dem Kraftstoff an den Kraftstofftank (5) angeschlossen ist,
- **dass** eine Brennstoffleitung (12) zur Versorgung des Reformers (11) mit dem als Brennstoff dienenden Kraftstoff an den Kraftstofftank (5) angeschlossen ist.

3. Energiebereitstellungssystem nach Anspruch 1 oder 2,
**dadurch gekennzeichnet,**
**dass** die Reformatzuführeinrichtung (16) eine Reformatleitung (17) aufweist, durch die das Reformatgas in die Brennkraftmaschine (2) oder in eine Frischgas der Brennkraftmaschine (2) zuführende Frischgasanlage (53) oder in eine Kraftstoff der Brennkraftmaschine (2) zuführende Kraftstoffleitung (3) einleitbar ist.

4. Energiebereitstellungssystem nach Anspruch 3,
**dadurch gekennzeichnet,**
**dass** die Reformatzuführeinrichtung (16) einen Reformatwärmeübertrager (19) aufweist, der in die Reformatleitung (17) eingebunden ist.

5. Energiebereitstellungssystem nach Anspruch 4,
**dadurch gekennzeichnet,**
**dass** der Reformatwärmeübertrager (19) außerdem in einen Kühlkreis (20) der Brennkraftmaschine (2) eingebunden ist und die Reformatleitung (17) mit dem Kühlkreis (20) wärmeübertragend koppelt.

6. Energiebereitstellungssystem nach einem der Ansprüche 3 bis 5,
**dadurch gekennzeichnet,**
**dass** die Reformatzuführeinrichtung (16) ein Steuerventil (57) zum Steuern der der Brennkraftmaschine (2) und/oder der Abgasanlage (54) zuzuführenden Menge an Reformatgas aufweist.

7. Energiebereitstellungssystem nach einem der Ansprüche 1 bis 6,
**dadurch gekennzeichnet,**
**dass** eine mit der Brennkraftmaschine (2) oder einer Motorsteuerung (24) sowie mit der Reformatzuführeinrichtung (16) gekoppelte Steuerung (22) vorgesehen ist, die so ausgebildet ist, dass sie zum Aufheizen der Brennkraftmaschine (2) während einer Warmlaufphase der Brennkraftmaschine (2) die Reformatzuführeinrichtung (16) zum Zuführen von Reformatgas zur Brennkraftmaschine (2) ansteuert.

8. Energiebereitstellungssystem nach den Ansprüchen 1 bis 7,
**dadurch gekennzeichnet,**
- **dass** eine Abgasanlage (7) zum Abführen von Motorabgas vorgesehen ist, in der ein NOX-Speicher (8) zum Speichern von im Motorabgas enthaltenem NOX und/oder ein Partikelfilter (9) zum Speichern von im Motorabgas enthaltenen Partikeln und/oder ein Oxidationskatalysator (10) zum Umsetzen von im Motorabgas enthaltenen Kohlenwasserstoffen und Kohlenmonoxid angeordnet ist,
- **dass** die Reformatzuführeinrichtung (16) außerdem zum Einleiten von Reformatgas in die Abgasanlage (7) stromauf des NOX-Speichers (8) und/oder stromauf des Partikelfilters (9) und/oder stromauf des Oxidationskatalysators (10) ausgestaltet ist.

9. Energiebereitstellungssystem nach den Ansprüche 7 und 8,
**dadurch gekennzeichnet,**
**dass** die Steuerung (22) außerdem so ausgestaltet ist,
- **dass** sie zum Regenerieren des NOX-Speichers (8) während eines stöchiometrischen oder unterstöchiometrischen Betriebs der Brennkraftmaschine (2) die Reformateinleiteinrichtung (16) zum Einleiten von Reformatgas in die Abgasleitung (7) stromauf des NOX-Speichers (8) ansteuert, und/oder
- **dass** sie zum Aufheizen des NOX-Speichers (8) während eines überstöchiometischen Betriebs der Brehnkraftmaschine (2) die Reformateinheiteinrichtung (16) zum Einleiten von Reformatgas in die Abgasleitung (7) stromauf des NOX-Speichers (8) ansteuert, und/oder
- **dass** sie zum Regenerieren des Partikelfilters (9) während eines überstöchiometrischen Betriebs der Brennkraftmaschine (2) die Reformateinleiteinrichtung (16) zum Einleiten von Reformatgas in die Abgasleitung (7) stromauf des Partikelfilters (9) und/oder stromauf des Oxidationskatalysators (10) ansteuert, und/oder
- **dass** sie zum Aufheizen des Oxidationskatalysators (10) während eines überstöchiometischen Betriebs der Brennkraftmaschine (2) die Reformateinheiteinrichtung (16) zum Einleiten von Reformatgas in die Abgasleitung (7) stromauf des Oxidationskatalysators (10) ansteuert.

## Claims

1. A system for the provision of energy, more preferably in a motor vehicle,
- with a combustion engine (1) that can be operated with a fuel for the provision of drive energy,
- with a combustible fuel cell system (28) for the provision of electric energy,
- wherein the combustible fuel cell system (28) comprises a reformer (11) for generating reformate gas containing hydrogen gas from a combustible fuel containing hydrogen and an oxidant containing oxygen,
- wherein the combustible fuel cell system (28)comprises a combustible fuel cell (29) for generating electric current from an anode gas formed by the reformate gas and a cathode gas containing oxygen gas,
- wherein for the conversion of reformate gas into drive energy a reformate feeding device (16) for the feeding of reformate gas to the combustion engine (2) is provided,
**characterized**
- **in that** the reformate feeding device (16) comprises a reformate delivery device (21) which is incorporated in a reformate line (17),
- **in that** the reformate feeding device (16) comprises a reformate storage device (43) with valve device (42) that is connected to the reformate line (17).

2. The energy provision system according to Claim 1, **characterized**
- **in that** a fuel tank (5) for storing the fuel is provided,
- **in that** a fuel line (3) for the supply of the combustion engine (2) with the fuel is connected to the fuel tank (5),
- **in that** a combustible fuel line (12) for the supply of the reformer (11) with the fuel serving as combustible fuel is connected to the fuel tank (5).

3. The energy provision system according to Claim 1 or 2, **characterized in that** the reformate feeding device (16) comprises a reformate line (17) through which the reformate gas can be fed into the combustion engine (2) or in a fresh gas system (53) feeding fresh gas to the combustion engine (2) or in a fuel line (3) feeding fuel to the combustion engine (2).

4. The energy provision system according to Claim 3, **characterized in that** the reformate feeding device (16) comprises a reformate heat transfer device (19) which is incorporated in the reformate line (17).

5. The energy provision system according to Claim 4, **characterized in that** the reformate heat transfer device (19) is additionally incorporated in a cooling circuit (20) of the combustion engine (2) and the reformate line (17) coupled to the cooling circuit (20) in a heat transferring manner.

6. The energy provision system according to any one of the Claims 3 to 5, **characterized in that** the reformate feeding device (16) comprises a control valve (57) for controlling the quantity of reformate gas to be fed to the combustion engine (2) and/or the exhaust system (54).

7. The energy provision system according to any one of the Claims 1 to 6, **characterized in that** a control (22) coupled to the combustion engine (2) or an engine control (24) and to the reformate feeding device (16) is provided, which is designed so that it activates the reformate feeding device (16) for feeding reformate gas to the combustion engine (2) for heating up the combustion engine (2) during a warming-up phase of the combustion engine (2).

8. The energy provision system according to Claims 1 to 7, **characterized**
- **in that** an exhaust system (7) for discharging engine exhaust gas is provided, in which a NOX storage unit (8) for the storage of NOX contained in the engine exhaust gas and/or a particle filter (9) for the storage of particles contained in the engine exhaust gas and/or an oxidation catalyst (10) for converting hydrocarbons and carbon monoxide contained in the engine exhaust gas is arranged,
- **in that** the reformate feeding device (16) is additionally configured for feeding reformate gas into the exhaust system (7) upstream of the NOX storage unit (8) and/or upstream of the particle filter (9) and/or upstream of the oxidation catalyst (10).

9. The energy provision system according to Claims 7 and 8, **characterized in that** the control (22) is additionally configured so
- that for regenerating the NOX storage unit (8) during stoichiometric or sub-stoichiometric operation of the combustion engine (2) activates the reformate feeding device (16) for feeding reformate gas into the exhaust line (7) upstream of the NOX storage unit (8), and/or
- that for heating up the NOX storage unit (8) during over-stoichiometric operation of the combustion engine (2) it activates the reformate feeding device (16) for feeding reformate gas into the exhaust line (7) upstream of the NOX storage unit (8), and/or
- so that for regenerating the particle filter (9) during over-stoichiometric operation of the combustion engine (2) it activates the reformate feeding device (16) for feeding reformate gas into the exhaust line (7) upstream of the particle filter (9) and/or upstream of the oxidation catalyst (10), and/or
- that for heating up the oxidation catalyst (10) during over-stoichiometric operation of the combustion engine (2) it activates the reformate feeding device (16) for feeding reformate gas into the exhaust line (7) upstream of the oxidation catalyst (10).

## Revendications

1. Système de fourniture d'énergie, notamment dans un véhicule automobile,
- comportant un moteur à combustion interne (2) fonctionnant avec un carburant pour fournir de l'énergie d'entraînement,
- comportant un système de cellule combustible (28) pour fournir de l'énergie électrique,
- dans lequel le système de cellule combustible (28) présente un reformeur (11) pour générer un gaz de reformat contenant du gaz d'hydrogène à partir d'un combustible contenant un hydrogène et un oxydateur contenant un oxygène,
- dans lequel le système de cellule combustible (28) présente une cellule combustible (29) pour générer un courant électrique à partir du gaz d'anode formé par le gaz de reformat et d'un gaz de cathode contenant du gaz d'oxygène ;
- dans lequel pour la conversion du gaz de reformat en énergie d'entraînement un dispositif d'introduction de reformat (16) pour introduire du gaz de reformat dans le moteur à combustion interne (2) est prévu,
**caractérisé en ce que**
- le dispositif d'introduction de reformat (16) présente un dispositif de transport de reformat (21), qui est intégré dans une conduite de reformat (17),
- le dispositif d'introduction de reformat (16) présente un accumulateur de reformat (43) avec un dispositif de soupape (42), qui est raccordé à la conduite de reformat (17).

2. Système de fourniture d'énergie selon la revendication 1,
**caractérisé en ce que**
- un réservoir de carburant (5) pour stocker le carburant est prévu,
- une conduite de carburant (3) pour alimenter le moteur à combustion interne (2) en carburant est raccordé au réservoir de carburant (5),
- une conduite de combustible (12) pour alimenter le reformeur (11) en carburant servant de combustible est raccordé au réservoir de carburant (5).

3. Système de fourniture d'énergie selon la revendication 1 ou 2,
**caractérisé en ce que**
le dispositif d'introduction de reformat (16) présente une conduite de reformat (17), à travers laquelle le gaz de reformat peut être introduit dans le moteur à combustion interne (2) ou dans une installation de gaz frais (53) introduisant du gaz frais dans le moteur à combustion interne (2) ou dans une conduit de carburant (3) introduisant un carburant dans le moteur à combustion interne (2).

4. Système de fourniture d'énergie selon la revendication 3,
**caractérisé en ce que**
le dispositif d'introduction de reformat (16) présente un échangeur de chaleur de reformat (19), qui est intégré dans la conduite de reformat (17).

5. Système de fourniture d'énergie selon la revendication 4,
**caractérisé en ce que**
l'échangeur de chaleur de reformat (19) est en outre intégré à un circuit de refroidissement (20) du moteur à combustion interne (2) et couple la conduite de reformat (17) au circuit de refroidissement (20) avec transmission de chaleur.

6. Système de fourniture d'énergie selon uen des revendications 3 à 5,
**caractérisé en ce que**
le dispositif d'introduction de reformat (16) présente une soupape de commande (57) pour commander la quantité de gaz de reformat à introduire dans le moteur à combustion interne (2) et/ou dans l'installation de gaz d'échappement (54).

7. Système de fourniture d'énergie selon une des revendications 1 à 6,
**caractérisé en ce que**
une unité de commande (22) couplée au moteur à combustion interne (2) ou à une commande de moteur (24) ainsi qu'au dispositif d'introduction de reformat (16) est prévue, qui est conçue de telle sorte que pour chauffer le moteur à combustion interne (2) pendant une phase de réchauffement du moteur à combustion interne (2) elle commande le dispositif d'introduction de reformat (16) pour introduire du gaz de reformat dans le moteur à combustion interne (2).

8. Système de fourniture d'énergie selon els revendications 1 à 7,
**caractérisé en ce que**
- une installation de gaz d'échappement (7) pour évacuer le gaz d'échappement du moteur est prévue, dans laquelle un adsorbeur NOX (8) pour stocker le NOX contenu dans le gaz d'échappement du moteur et/ou un filtre à particules (9) pour stocker les particules contenues dans le agz d'échappement du moteur et/ou un catalyseur d'oxydation (10) pour convertir les hydrocarbures et le monoxyde de carbone contenus dans le gaz d'échappement du moteur est disposé,
- le dispositif d'introduction de reformat (16) est en outre conçu afin d'introduire du gaz de reformat dans l'installation de gaz d'échappement (7) en amont de l'adsorbeur NOX (8) et/ou en amont du filtre à particules (9) et/ou en amont du catalyseur d'oxydation (10).

9. Système de fourniture d'énergie selon les revendications 7 et 8,
**caractérisé en ce que**
l'unité de commande (22) est en outre conçue de telle sorte que
- elle commande pour régénérer l'adsorbeur NOX (8), pendant un fonctionnement stoéchiométrique ou sous-stoéchiométrique du moteur à combustion interne (2), le dispositif d'introduction de reformat (16) afin d'introduire le gaz de reformat dans la conduite de gaz d'échappement (7) en amont de l'adsorbeur NOX (8), et/ou
- elle commande pour chauffer l'adsorbeur NOX (8) pendant un fonctionnement sur-stoéchiométrique du moteur à combustion interne (2) le dispositif d'introduction de reformat (16) afin d'introduire le gaz de reformat dans la conduite de gaz d'échappement (7) en amont de l'adsorbeur NOX (8), et/ou
- elle commande pour régénérer le filtre à particules (9) pendant un fonctionnement sur-stoéchiométrique du moteur à combustion interne (2) le dispositif d'introduction de reformat (16) pour introduire du gaz de reformat dans la conduite de gaz d'échappement (7) en amont du filtre à particules (9) et/ou en amont du catalyseur d'oxydation (10), et/ou
- elle commande pour chauffer le catalyseur d'oxydation (10) pendant un fonctionnement sur-stoéchiométrique du moteur à combustion interne (2) le dispositif d'introduction de reformat (16) pour introduire du gaz de reformat dans la conduite de gaz d'échappement (7) en amont du catalyseur d'oxydation (10).
